Europäisches Patentamt

European Patent Office

Office européen des brevets

(11) Numéro de publication: **0 313 483 B1**

## FASCICULE DE BREVET EUROPEEN

(45) Date de publication de fascicule du brevet: **09.06.93**

(51) Int. Cl.5: **C04B 2/02**, B02C 23/06, C04B 24/26

(21) Numéro de dépôt: **88420357.1**

(22) Date de dépôt: **19.10.88**

(54) **Agent de broyage de la chaux en vue d'en augmenter la réactivité.**

(30) Priorité: **23.10.87 FR 8714956**

(43) Date de publication de la demande:
**26.04.89 Bulletin 89/17**

(45) Mention de la délivrance du brevet:
**09.06.93 Bulletin 93/23**

(84) Etats contractants désignés:
**BE DE ES IT NL SE**

(56) Documents cités:
DE-A- 2 031 109
FR-A- 2 351 706
FR-A- 2 539 137
US-A- 3 604 634
US-A- 4 175 975

(73) Titulaire: **COATEX S.A.**
**35, rue Ampère**
**F-69730 Genay(FR)**

(72) Inventeur: **Mongoin, Jacques**
**6, Place Colbert**
**F-69001 Lyon(FR)**
Inventeur: **Ravet, Georges**

**F-69290 St Genis-Les-Ollieres(FR)**
Inventeur: **Suau, Jean-Marc**
**249, La Duchère Plateau**
**F-69009 Lyon(FR)**

Rank Xerox (UK) Business Services
(3.10/3.6/3.3.1)

EP 0 313 483 B1

**Description**

Domaine de l'invention

L'invention concerne un agent de broyage de chaux grossière en milieu aqueux permettant de produire par broyage des suspensions aqueuses de chaux affinée ayant une teneur en matière sèche d'au moins 20% en poids et préférentiellement d'au moins 40% en poids, disposant d'une rhéologie stable dans le temps, dont les particules constitutives ont une dimension inférieure à 4 microns et dont au moins 50% d'entre elles ont une dimension inférieure à 2,9 microns.

L'invention concerne aussi le procédé de broyage en milieu aqueux de la chaux grossière en présence de l'agent de broyage.

L'invention concerne également l'application nouvelle aux domaines chimiques des suspensions aqueuses de chaux affinées par broyage en présence de l'agent.

Arrière-plan de l'invention.

La chaux hydratée (ou encore hydroxyde de calcium) est depuis longtemps utilisée dans de nombreux domaines sous forme de suspensions aqueuses, connues sous le nom de lait de chaux, dont les particules, souvent grossières et irrégulières, sont à l'origine d'une mauvaise réactivité et de sédimentation importante. De telles suspensions aqueuses de chaux sont, malgré tout, mises en oeuvre comme agent de neutralisation chimique ou encore comme agent antiseptique, bien que la chaux ait un faible coefficient de solubilité en milieu aqueux.

Comme cette substance minérale est obtenue, d'abord par la calcination du carbonate de calcium à haute température, puis par affinement du produit calciné par un broyage à sec ou encore par un broyage en présence d'une faible quantité d'eau, la chaux produite par cet affinement, qu'elle soit hydratée ou non, se présente sous la forme d'agrégats dont la granulométrie très grossière se situe dans l'intervalle de 5 à 20 microns.

Des particules de chaux hydratées de granulométrie aussi grossière offrent, par définition, une faible réactivité quand elles sont mises en oeuvre dans cet état, aussi bien sous une forme pulvérulente que sous la forme d'une suspension aqueuse, même en présence d'un additif tel qu'un agent dispersant.

Aussi, pour pouvoir augmenter la réactivité de la chaux, il s'est révélé souhaitable au cours de ces dernières années, d'en améliorer la finesse jusqu'à parvenir à une dimension particulaire de préférence inférieure à 5 microns et, dans le cas où elle se présente sous l'aspect d'une suspension aqueuse pigmentaire, d'en augmenter la concentration en matière sèche simultanément à l'affinement des particules.

Pour atteindre l'objectif d'une dimension particulaire de préférence inférieure à 5 microns, il s'est révélé souhaitable d'effectuer un broyage plus efficace par l'une ou l'autre des voies sèche ou humide.

Dans le cas où l'on pratique un broyage par voie sèche, les matériaux minéraux broyés doivent subir une sélection de taille afin de recueillir les particules les plus fines souhaitablement recherchées et de recycler toutes les particules ayant une dimension trop importante autant de fois qu'il serait nécessaire pour les convertir à la dimension recherchée, ou de les éliminer dans la mesure du possible. Une telle opération de recyclage et/ou d'élimination des particules surdimensionnées reste du domaine de l'utopie tant le coût de l'opération serait industriellement inacceptable.

Dans le cas où l'on pratique un broyage par voie humide, la suspension résultant dudit broyage est naturellement limitée actuellement à une concentration industrielle en matière sèche au plus égale à 20% en poids à cause de l'augmentation constatée des viscosités, que le broyage soit effectué dans l'eau seule ou en milieu aqueux en présence d'un agent dispersant d'origine minérale ou organique.

Cette deuxième voie consiste à mettre en oeuvre, lors des opérations de broyage en milieu aqueux, des agents de broyage de plus en plus élaborés devant faciliter l'opération dudit broyage, la dispersion des particules et le maintien des viscosités des suspensions produites à des valeurs acceptables.

Un premier type d'agent dispersant, qui pourrait être considéré comme un agent de broyage (décrit dans les brevets GB 2,127,395 et FR 2,351,706), est constitué par des polyacrylates, polyphosphates et lignosulfonates alcalins. Cet agent, mis en oeuvre dans des suspensions de chaux et/ou de carbonate de calcium ou encore d'autres minerais, à une concentration d'au moins 40% en poids, intervient après une floculation des matières minérales au moyen d'un polymère généralement de haut poids moléculaire.

Il est certain que l'action de floculation préalable provoque l'agglomération des particules en donnant des flocs de réactivité chimique amoindrie, bien que favorablement dispersés grâce à la présence de l'agent dispersant.

Mais, si la vocation de ce type d'agent est essentiellement l'obtention d'une suspension de faible viscosité et de haute concentration en matière sèche, cet agent favorise aussi l'augmentation du diamètre des particules par la formation des flocs et non leur affinement comme cela aurait été souhaitable (GB 2,127,395) ou par l'impossibilité d'affiner à une dimension particulaire inférieure à 4 micromètres (FR 2,351,706).

Un deuxième type d'agent dispersant (décrit dans le brevet FR 2,387,911) se compose d'un sel de copolymères d'acides acrylique et maléïque de poids moléculaire moyen compris entre 2 000 et 10 000, qui permet de réaliser des suspensions pigmentaires de carbonate de calcium ayant des taux de matière sèche compris seulement entre 40% et 60% en poids et ne pouvant pas dépasser la valeur supérieure. Quand un tel agent est mis en oeuvre, non plus dans une suspension de carbonate de calcium, mais dans une suspension de chaux à 40% en poids de matière sèche soumise à une opération de broyage, il se produit une très rapide élévation de la viscosité du milieu provoquant le blocage du broyeur industriel sans pour autant qu'un affinement sensible des particules de chaux ait été constaté.

Un troisième type d'agent, décrit comme agent de broyage dans le brevet FR 2,539,137, est constitué par les polymères et/ou copolymères acryliques acides neutralisés simultanément par de la chaux et un autre agent de neutralisation disposant d'une fonction monovalente. Un tel agent de broyage permet la stabilisation des propriétés rhéologiques des suspensions de carbonate de calcium dans le temps mais il n'autorise pas, dans le cas de la chaux, la réalisation simultanée d'une augmentation de la concentration en matière sèche et d'un affinement des particules tant il provoque une importante et rapide augmentation de la viscosité allant jusqu'au blocage du broyeur industriel.

Un dernier type d'agent dispersant (décrit dans le brevet EP 0 061 354) consiste en des polyélectrolytes de faible poids moléculaire moyen mais toujours supérieur à 2 200, tels que les carboxyméthylcelluloses, les polymères d'acide acrylique et méthacrylique, les lignosulfonates. Les agents dispersants appartenant à cette famille conduisent à de bons résultats quand ils sont utilisés pour la mise en suspension de particules de chaux grossières toujours supérieures à 5 microns, mais provoquent une élévation brutale et incontrôlable de la viscosité de ces suspensions allant jusqu'au blocage du broyeur industriel quand ils sont utilisés comme agent de broyage à des concentrations de matière sèche de l'ordre de 40% en poids ou plus.

Sommaire de l'invention

Forte des inconvénients précités, la Demanderesse, poursuivant ses recherches, a trouvé et mis au point un agent de broyage de la chaux en milieu aqueux permettant d'obtenir une suspension affinée ayant simultanément une concentration en matière sèche d'au moins 40% en poids, une dimension des particules inférieure à 4 microns et dont 50% d'entre elles ont une dimension inférieure à 2,9 microns et une viscosité faible et stable dans le temps.

Selon l'invention, l'agent de broyage de la chaux grossière à affiner en milieu aqueux jusqu'à une dimension microparticulaire, constitué de polymère et/ou copolymère éthylénique hydrosoluble, se caractérise en ce que, dans le but d'augmenter la réactivité de la chaux, ledit agent est constitué d'au moins un polymère et/ou copolymère acide :

a) formé d'au moins un monomère éthylénique monocarboxylique,

b) sélectionné dans l'intervalle des poids moléculaires moyens compris entre 200 et 1 900.

Description détaillée de l'invention

Ainsi, alors que l'art antérieur décrit pour l'essentiel des agents dispersants et/ou de broyage par voie humide dont certains sont des polymères et/ou copolymères éthyléniques hydrosolubles, l'agent de broyage selon l'invention se distingue de l'art antérieur par le fait qu'il se compose d'au moins un polymère et/ou copolymère éthylénique, formé de manière intangible d'au moins un monomère éthylénique monocarboxylique. Sinon, tout agent de broyage de la chaux en milieu aqueux ne contenant pas au moins partiellement ledit monomère est voué aux mêmes effets que ceux provoqués par les agents de l'art antérieur, c'est-à-dire qu'il est à l'origine d'une brutale et incontrôlable élévation de la viscosité de la suspension de chaux, rendant impossible son affinement dès lors que la concentration en matière sèche atteint ou dépasse 40% en poids.

De plus, l'agent de broyage selon l'invention à base d'au moins un polymère et/ou copolymère formé d'au moins un monomère éthylénique monocarboxylique doit être sélectionné par son poids moléculaire moyen dans l'intervalle précité de 200 à 1 900.

Hors de ce domaine des poids moléculaires moyens, tout polymère de même structure, de poids moléculaire moyen supérieur à 1 900, même proche de cette limite, conduit à des suspensions de chaux mal broyées, voire impossibles à broyer quand la concentration en matière sèche de la suspension dépasse 40% en poids. Dans ce cas, les caractéristiques de viscosité et de dimension particulaire sont mauvaises.

Ainsi, comme la Demanderesse a pu le constater, il apparaît d'une manière surprenante que les deux conditions précitées conduisant à l'agent de broyage selon l'invention coopèrent pleinement en créant un état de synergie, permettant l'obtention de suspensions aqueuses de chaux microparticulaires, hautement concentrées en matière sèche, de viscosités faibles et stables, et dont les particules ont la dimension souhaitée et une réactivité très améliorée pour les applications envisagées.

L'agent de broyage selon l'invention est constitué, comme cela a été antérieurement exprimé, par au moins un polymère et/ou copolymère acide comportant au moins un monomère éthylénique monocarboxylé.

Le monomère éthylénique monocarboxylé est préférentiellement choisi parmi les acides acrylique et méthacrylique.

Les autres monomères mis en oeuvre dans le cadre de l'invention peuvent être l'acide itaconique, crotonique, fumarique, anhydride maléique ou encore isocrotonique, aconitique, mésaconique, sinapique, undécylénique, angélique, hydroxyacrylique, ou bien l'acroléïne, l'acrylamide et ses substitués, l'acrylonitrile, les esters des acides acrylique et méthacrylique et, en particulier, les acrylates et méthacrylates en $C_1$ à $C_8$ ainsi que le méthacrylate de diméthylaminoéthyle quaternisé ou non, les imidazoles, vinylpyrolidone, vinylcaprolactame, l'éthylène, le propylène, l'isobutylène, le diisobutylène, l'acétate de vinyle, le styrène et ses substitués, l'alphaméthylstyrène, la méthylvinylcétone, les chlorures de vinyle, les monomères hydroxylés, plus spécialement les acrylates et les méthacrylates d'éthylène glycol, de propylène glycol ainsi que leurs dérivés phosphatés, phosphonés, phosphonylés, sulfatés, sulfonés, nitrés, nitrosés.

Ces polymères et/ou copolymères acides résultent de la polymérisation et/ou copolymérisation selon les procédés connus, en présence d'initiateurs et des régulateurs appropriés, en milieu aqueux, alcoolique, hydroalcoolique, aromatique, aliphatique ou dans un solvant halogéné, de l'un au moins des monomères acides acrylique et/ou méthacrylique.

Ainsi, le milieu de polymérisation peut être l'eau, le méthanol, l'éthanol, le propanol, l'isopropanol, les butanols, ou encore le diméthylformamide, le diméthylsulfoxyde, le tétrahydrofurane, l'acétone, la méthyléthylcétone, l'acétate d'éthyle, l'acétate de butyle, l'hexane, l'heptane, le benzène, le toluène, l'éthylbenzène, le xylène, le mercaptoéthanol, le tertiododécylmercaptan, l'acide thioglycolique et ses esters, le n-dodécylmercaptan, les acides acétique, tartrique, lactique, citrique, gluconique, glucoheptonique, l'acide-2-mercaptopropionique, le thiodiéthanol, les solvants halogénés comme le tétrachlorure de carbone, le chloroforme, le chlorure de méthylène, le chlorure de méthyle, les éthers de monopropylèneglycol, diéthylèneglycol.

Les polymères et/ou copolymères destinés à être utilisés comme agent de broyage selon l'invention sont généralement choisis parmi ceux ayant un poids moléculaire compris entre 200 et 1 900 et préférentiellement entre 500 et 1 500.

Dès la fin de la polymérisation, les polymères et/ou copolymères acides selon l'invention en solution aqueuse sont recueillis et peuvent être mis en oeuvre sous cette forme.

Selon une variante qui s'est révélée être intéressante, les polymères et/ou copolymères selon l'invention en solution aqueuse peuvent être totalement ou partiellement neutralisés par un agent de neutralisation disposant d'une fonction monovalente. Toutefois, à cet agent monovalent peut être associé un agent de neutralisation ayant une fonction polyvalente.

Dans le premier cas, l'agent de neutralisation est souhaitablement choisi dans le groupe constitué par les cations alcalins et assimilés, en particulier le lithium, le sodium, le potassium, l'ammonium ou amine éventuellement polysubstituée. Cet agent, dans le deuxième cas, peut être associé à un agent du groupe des alcalino-terreux ou assimilés, préférentiellement le calcium et le magnésium, le zinc, l'aluminium.

En pratique, la phase liquide résultant de la polymérisation et/ou copolymérisation et contenant le polymère et/ou copolymère acide peut être utilisée sous cette forme comme agent de broyage de la chaux grossière à affiner, mais elle peut également être séchée par tous moyens connus pour en éliminer cette phase et isoler le polymère et/ou copolymère sous la forme d'une fine poudre et être utilisée sous cette autre forme comme agent de broyage.

Dans une plus large perspective, l'agent de broyage selon l'invention peut être mis en oeuvre selon la méthode de préparation d'une suspension aqueuse de chaux comportant les étapes de réalisation suivantes :

4

a) on réalise sous agitation la préparation d'une suspension aqueuse de chaux grossière en introduisant d'abord tout ou partie de l'agent de broyage dans la phase aqueuse puis la chaux de manière à obtenir une suspension fluide et souhaitablement homogène,

b) on introduit en continu la suspension préparée selon (a) dans une zone de broyage constituée par un broyeur à micro-éléments,

c) on maintient la température de la suspension au cours du broyage à un niveau inférieur à 100°C et préférentiellement comprise entre la température ambiante et 50°C,

d) on malaxe la suspension à broyer en présence des micro-éléments pendant le temps nécessaire à l'obtention de la granulométrie moyenne recherchée,

e) éventuellement, on introduit au cours du broyage en au moins une fois une fraction complémentaire de l'agent de broyage,

f) à la sortie du broyeur, on sépare en continu la suspension de chaux finement broyée d'avec les corps broyants et les particules de chaux refusées parce que trop grossières,

g) éventuellement, on introduit dans la suspension de chaux finement broyée au moins un agent modificateur de la rhéologie.

L'agent de broyage selon l'invention est introduit dans la suspension aqueuse de chaux à raison de 0,05 à 2% en poids de matières actives par rapport au poids sec des matériaux minéraux grossiers à broyer, et préférentiellement à raison de 0,5% à 1,5%.

Dans le cas où au moins un agent modificateur de la rhéologie est introduit dans la suspension de chaux issue du broyage, il est choisi parmi ceux ayant la propriété de régler la viscosité à une valeur appropriée souhaitée par l'utilisateur pour chaque application ultérieure, ou encore de favoriser la compatibilité entre la chaux et d'autres charges éventuellement introduites dans le milieu.

Cet agent modificateur de la rhéologie, quand il est introduit dans la suspension issue du broyage, l'est à raison de 0,01% à 3% en poids de matières actives par rapport au poids sec des matériaux minéraux.

La suspension recueillie à l'issue du broyage a généralement une concentration en matière sèche d'au moins 20% et préférentiellement comprise dans l'intervalle de 40 à 60% en poids, une dimension des particules pigmentaires inférieure à 4 microns, 50% d'entre elles ayant une dimension inférieure à 2,9 microns (dimension médiane).

La suspension de chaux ainsi affinée grâce à la présence de l'agent de broyage selon l'invention peut être avantageusement utilisée pour la neutralisation des eaux, des fumées industrielles, ou encore comme agent de neutralisation chimique dans les procédés de synthèse industriels, tels que par exemple la production de dodécylbenzènesulfonate de calcium, agents dispersants pour phytosanitaires, lubrifiants, savons calciques, des agents antiseptiques, des agents pour traitement de surface, en raison de la substantielle augmentation de sa réactivité la plaçant en équivalence avec les hydroxydes alcalins.

La portée et l'intérêt de l'invention seront mieux perçus grâce aux exemples illustratifs et comparatifs à l'égard de l'art antérieur.

Exemple 1

Cet exemple, dont le but est d'illustrer l'art connu, concerne la préparation d'une suspension de chaux grossière soumise à un broyage pour l'affiner en une suspension microparticulaire.

Dans ce but, plusieurs suspensions de chaux grossière ont été préparées à partir d'une chaux de même origine (ULTRA-LEICHT du gisement de Wulfrath, commercialisée par RHEINISCHE KALKSTEINWERKE GmbH) en mettant en oeuvre divers agents de broyage appartenant à l'art antérieur.

Un premier groupe d'essais (essais 1 et 2) concerne la préparation et le broyage de suspensions aqueuses de chaux exemptes de tout agent de broyage et ayant une concentration en matière sèche de 20 à 30% en poids.

Un deuxième groupe d'essais (essais 3 à 5) concerne la préparation et le broyage de suspensions aqueuses de chaux à diverses concentrations en présence d'un polyacrylate de sodium de poids moléculaire moyen 2 400, commercialisé sous le nom de marque DISPEX N40.

Un troisième groupe d'essais (essais 6 à 8) est relatif à la préparation et au broyage de suspensions aqueuses de chaux à diverses concentrations en présence de polyacrylate de sodium de poids moléculaire moyen 2 500, commercialisé sous la marque OROTAN 850.

Un quatrième groupe d'essais (essais 9 et 10) concerne la mise en oeuvre dans des suspensions de chaux à broyer de carboxyméthylcellulose de faible poids moléculaire, commercialisé sous la marque FINNFIX 5.

Un cinquième groupe d'essais (essais 11 à 13) est relatif à l'utilisation d'un polyacrylate de sodium de poids moléculaire moyen 4 000 comme agent de broyage de la chaux en suspension aqueuse.

5

Ces essais ont été exécutés selon les mêmes critères expérimentaux en effectuant le broyage dans le même appareillage afin que les résultats obtenus puissent être comparés.

Pour chaque essai, on a préparé une suspension aqueuse de chaux d'origine telle que précitée, ayant une granulométrie inférieure à 26 microns.

La suspension aqueuse avait une concentration variable en matière sèche exprimée en pour cent en poids par rapport à la masse totale, selon les quantités indiquées dans le tableau ci-après.

L'agent de broyage était présent dans cette suspension selon les quantités indiquées dans le tableau ci-après, exprimées en pour cent en poids par rapport à la masse de chaux sèche à broyer.

La suspension ainsi préparée était placée dans un broyeur du type Dyno-Mill à cylindre fixe et impulseur tournant, dont le corps broyant était constitué par des billes de corindon de diamètre compris dans l'intervalle 0,6 millimètre à 1,0 millimètre.

Le volume total occupé par le corps broyant était de 5 000 millilitres tandis que sa masse était de 10 kilogrammes.

La chambre de broyage avait un volume de 5 000 millilitres.

La vitesse circonférentielle du broyeur était de 10 mètres par seconde.

La suspension de chaux était recyclée à raison de 50 litres par heure.

La sortie du broyeur Dyno-Mill était munie d'un séparateur de mailles 300 microns, permettant de séparer la suspension résultant du broyage et le corps broyant.

La température lors de chaque essai de broyage était maintenue à 25° C.

Le temps de broyage dans les conditions d'expérimentation précitées était variable et au plus égal à 90 minutes quand le broyage était possible.

A la fin du broyage, la viscosité de la suspension microparticulaire était mesurée à l'aide d'un viscosimètre Brookfield, à une température de 20° C et aux vitesses de rotation de 10 et 100 tours par minute. Après un temps de repos de 24 heures, la viscosité de chaque suspension était à nouveau mesurée après une brève agitation.

De même, à la fin du broyage, la granulométrie était déterminée par l'intermédiaire du granulomètre à laser H R 850 de la société CILAS ALCATEL.

6

Tous les résultats expérimentaux relatifs aux essais 1 à 13 sont regroupés dans le Tableau I.

## TABLEAU I

| N° Essai | Agent de broyage | Poids moléculaire de l'agent de broyage | Concentration de la chaux en % en poids | % d'agent de broyage en sec/sec | Temps de broyage en mn | Diamètre Médian après broyage en μm | Viscosité Brookfield en mPs sortie broyage 10T | 100T | 24 h après broyage 10T | 100T |
|---|---|---|---|---|---|---|---|---|---|---|
| 1 | sans | - | 20 | 0 | 39 | 2,3 | 4 500 | 480 | 5 000 | 520 |
| 2 | sans | - | 30 | 0 | | | Broyage impossible | | | |
| 3 | Dispex N 40 | 2 400 | 30 | 1 | 48 | 2,7 | 3 000 | 365 | 3 500 | 410 |
| 4 | Dispex N 40 | 2 400 | 45 | 1,5 | 22 | 3,2 | 2 300 | 345 | 2 600 | 390 |
| 5 | Dispex N 40 | 2 400 | 50 | 1,5 | 16 | 3,8 | 2 400 | 450 | 2 800 | 490 |
| 6 | Orotan 850 | 2 500 | 30 | 1 | 62 | 2,8 | 3 500 | 415 | 3 700 | 470 |
| 7 | Orotan 850 | 2 500 | 40 | 1 | 6 | 4,3 | 2 450 | 355 | 2 700 | 410 |
| 8 | Orotan 850 | 2 500 | 50 | 1,5 | | | Broyage impossible | | | |
| 9 | Finnfix 5 | structure chimique polycyclique non comparative | 30 | 1 | 5 | 4,5 | 3 500 | 540 | 4 000 | 610 |
| 10 | Finnfix 5 | | 40 | 1,5 | | | Broyage impossible | | | |
| 11 | COATEX DT 450 | 4 000 | 30 | 1 | 16 | 2,6 | 3 500 | 450 | 3 700 | 490 |
| 12 | COATEX DT 450 | 4 000 | 45 | 1,5 | 21 | 3,3 | 3 500 | 400 | 3 650 | 470 |
| 13 | COATEX DT 450 | 4 000 | 50 | 2 | | | Broyage impossible | | | |

Le Tableau I révèle que :
- le broyage de la chaux en milieu aqueux sans l'assistance d'un agent de broyage n'est possible que dans la limite où la concentration en matière sèche est d'environ 20% en poids (diamètre médian des particules après broyage : 2,3 microns). Au-delà de cette concentration, le broyage de la chaux se manifeste impossible,

- le broyage de la chaux en milieu aqueux avec l'assistance d'un agent de broyage, choisi parmi ceux de l'art antérieur ayant un poids moléculaire moyen le plus faible, est possible et donne des résultats intéressants quand la concentration en chaux du milieu de broyage est de l'ordre de 30% en poids. Au-delà de cette concentration, le diamètre médian des particules broyées reste supérieur à 3 microns quand le broyage est encore possible, c'est-à-dire quand la concentration en chaux est inférieure à 40% en poids.

Exemple 2

Cet exemple, destiné à illustrer l'objet de l'invention, concerne le broyage de la même chaux grossière (mise en oeuvre dans l'exemple 1) en présence d'un agent de broyage constitué par des homopolymères acides de poids moléculaires moyens variant de 800 à 7 000 salifiés par l'ion sodium.

Pour ce faire, plusieurs essais ont été effectués, faisant usage (essais 14 à 31) d'homopolymères d'acide acrylique et (essais 32 et 33) d'homopolymère d'acide méthacrylique, les suspensions de chaux soumises au broyage ayant elles-mêmes des concentrations en matière sèche différentes, variant de 30 à 50% en poids.

Tous ces essais ont été exécutés selon les mêmes critères et avec les mêmes appareils que ceux utilisés dans l'exemple 1.

Dans ces conditions, les résultats provenant de ces divers essais ont été réunis dans le Tableau II ci-après.

## TABLEAU II

| N° Essai | Agent de broyage | Poids moléculaire de l'agent de broyage | Concentration de la chaux en % en poids | % d'agent de broyage en sec/sec | Temps de broyage en mn | Diamètre Médian après broyage en µm | Viscosité Brookfield en mPs — sortie broyage 10T | Viscosité Brookfield en mPs — sortie broyage 100T | Viscosité Brookfield en mPs — 24 h après broyage 10T | Viscosité Brookfield en mPs — 24 h après broyage 100T |
|---|---|---|---|---|---|---|---|---|---|---|
| 14 | Homopolymère de l'acide acrylique | 800 | 30 | 1 | 82 | 1,9 | 3 000 | 400 | 3 250 | 430 |
| 15 | | 800 | 45 | 1,5 | 40 | 2,4 | 6 500 | 650 | 7 000 | 690 |
| 16 | | 800 | 50 | 1,5 | 35 | 2,6 | 2 800 | 420 | 3 100 | 465 |
| 17 | | 1 000 | 30 | 1 | 68 | 2 | 3 100 | 450 | 3 300 | 470 |
| 18 | | 1 000 | 45 | 1,5 | 40 | 2,6 | 6 000 | 600 | 6 500 | 640 |
| 19 | | 1 000 | 50 | 1,5 | 33 | 2,7 | 3 000 | 440 | 3 200 | 470 |
| 20 | | 1 800 | 30 | 1 | 70 | 2 | 3 000 | 410 | 3 200 | 440 |
| 21 | | 1 800 | 45 | 1,5 | 37 | 2,7 | 6 200 | 630 | 6 600 | 685 |
| 22 | | 1 800 | 50 | 1,5 | 31 | 2,8 | 3 150 | 450 | 3 500 | 500 |
| 23 | | 2 200 | 30 | 1 | 47 | 2,2 | 3 300 | 520 | 3 700 | 590 |
| 24 | | 2 200 | 45 | 1,5 | 30 | 3,2 | 4 500 | 470 | 5 000 | 510 |
| 25 | | 2 200 | 50 | 1,5 | 15 | 4 | 2 300 | 370 | 2 850 | 420 |
| 26 | | 4 000 | 30 | 1 | 16 | 2,6 | 3 500 | 450 | 3 900 | 490 |
| 27 | | 4 000 | 45 | 1,5 | 21 | 3,3 | 3 700 | 440 | 3 850 | 475 |
| 28 | | 4 000 | 50 | 1,5 | 5 | 5,0 | 2 100 | 310 | 2 600 | 360 |
| 29 | | 7 000 | 30 | 1 | 17 | 2,6 | 4 600 | 500 | 4 900 | 550 |
| 30 | | 7 000 | 45 | 1,5 | 5 | 3,9 | 1 400 | 200 | 2 500 | 380 |
| 31 | | 7 000 | 50 | 1,5 | | Broyage impossible | | | | |
| 32 | Homopolymère de l'acide méthacrylique | 1 300 | 30 | 1 | 61 | 2 | 3 400 | 470 | 3 550 | 490 |
| 33 | | 1 300 | 45 | 1,5 | 33 | 2,7 | 3 500 | 420 | 3 700 | 500 |

Le tableau révèle que l'efficacité de l'agent de broyage selon l'invention est excellente quand son poids moléculaire est inférieur à 1 900.

Tel est le cas des essais 14 à 22 pour lesquels l'agent de broyage est un homopolymère d'acide acrylique, et des essais 32 et 33 pour lesquels l'agent de broyage est un homopolymère d'acide méthacrylique : les essais ci-dessus évoqués conduisent à des suspensions de chaux finement broyées dont la dimension moyenne des particules est inférieure à 2,9 microns.

Tous les autres essais (essais 23 à 31) dans lesquels l'agent de broyage a un poids moléculaire supérieur à 1 900 conduisent à des résultats d'autant plus médiocres que le poids moléculaire moyen est plus important.

Exemple 3

Cet exemple, destiné à illustrer l'objet de l'invention, concerne le broyage de la même chaux grossière (déjà mise en oeuvre dans les exemples précédents) en présence d'un agent de broyage constitué par des copolymères d'acide acrylique (85% en poids) et de méthacrylate de diméthylaminoéthyl (15% en poids) quaternisé avec du chlorure de méthyle, de poids moléculaires moyens variant de 500 à 2 500 et salifiés par l'ion sodium.

Dans ce cas, plusieurs essais ont été effectués (essais 34 à 48), les suspensions aqueuses de chaux soumises au broyage en présence dudit agent ayant des concentrations en matière sèche différentes variant de 30 à 45% en poids.

Tous ces essais ont été réalisés selon la même procédure et les mêmes moyens technologiques que dans l'exemple 1.

Tous les résultats de ces essais ont été consignés dans le Tableau III ci-après.

## TABLEAU III

| N° Essai | Poids moléculaire de l'agent de broyage | Concentration de la chaux en % en poids | % d'agent de broyage en sec/sec | Temps de broyage en mn | Diamètre Médian après broyage en μm | Viscosité Brookfield en mPs sortie broyage 10T | Viscosité Brookfield en mPs sortie broyage 100T | Viscosité Brookfield en mPs 24 h après broyage 10T | Viscosité Brookfield en mPs 24 h après broyage 100T |
|---|---|---|---|---|---|---|---|---|---|
| 34 | 500 | 30 | 1 | 68 | 2 | 3 300 | 460 | 3 550 | 485 |
| 35 | 500 | 40 | 1 | 25 | 2,7 | 3 700 | 540 | 3 950 | 575 |
| 36 | 500 | 45 | 1,5 | 19 | 2,7 | 3 250 | 340 | 3 500 | 365 |
| 37 | 1 000 | 30 | 1 | 80 | 1,9 | 4 450 | 560 | 4 800 | 600 |
| 38 | 1 000 | 40 | 1 | 32 | 2,6 | 3 950 | 420 | 4 150 | 455 |
| 39 | 1 000 | 45 | 1,5 | 43 | 2,1 | 3 400 | 390 | 3 650 | 420 |
| 40 | 1 600 | 30 | 1 | 75 | 2 | 4 400 | 540 | 4 700 | 575 |
| 41 | 1 600 | 40 | 1 | 30 | 2,6 | 3 400 | 400 | 3 500 | 430 |
| 42 | 1 600 | 45 | 1,5 | 19 | 2,8 | 3 200 | 370 | 3 450 | 410 |
| 43 | 1 800 | 30 | 1 | 70 | 2 | 3 600 | 480 | 4 000 | 510 |
| 44 | 1 800 | 40 | 1 | 20 | 2,7 | 3 500 | 450 | 4 050 | 490 |
| 45 | 1 800 | 45 | 1,5 | 17 | 2,8 | 3 100 | 350 | 3 300 | 400 |
| 46 | 2 500 | 30 | 1 | 60 | 2,3 | 3 200 | 400 | 3 500 | 470 |
| 47 | 2 500 | 40 | 1 | 6 | 3,6 | 3 800 | 450 | 4 250 | 525 |
| 48 | 2 500 | 45 | 1,5 | 9 | 4 | 3 400 | 380 | 3 700 | 460 |

Il découle de ce tableau que l'efficacité de l'agent de broyage constitué par lesdits copolymères présente une efficience équivalente à celle constatée pour les homopolymères de l'exemple 2 puisque cet agent conduit à une dimension moyenne des particules broyées inférieure à 2,9 microns, à condition que le poids moléculaire moyen desdits copolymères soit inférieur à 1 900.

Dans les conditions des Tableaux II et III, l'agent de broyage selon l'invention se définit comme un polymère et/ou copolymère à base d'au moins un monomère éthylénique carboxylique ayant un poids moléculaire moyen compris de préférence entre 500 et 1 900.

Exemple 4

Cet exemple, destiné à illustrer l'objet de l'invention, concerne le broyage de la même chaux grossière (déjà mise en oeuvre dans les exemples précédents) en présence d'un agent de broyage constitué par des copolymères d'acide acrylique (75% en poids) et d'acrylamide (25% en poids) de poids moléculaires moyens variant de 700 à 3 200 et salifiés par l'ion sodium.

Dans ce cas, plusieurs essais ont été effectués (essais 49 à 60), les suspensions aqueuses de chaux soumises au broyage en présence dudit agent ayant des concentrations en matière sèche différentes variant de 30 à 45% en poids.

Tous ces essais ont été réalisés selon la même procédure et les mêmes moyens technologiques que dans l'exemple 1.

Tous les résultats de ces essais ont été consignés dans le Tableau IV ci-après.

## TABLEAU IV

| N° Essai | Poids moléculaire de l'agent de broyage | Concentration de la chaux en % en poids | % d'agent de broyage en sec/sec | Temps de broyage en mn | Diamètre Médian après broyage en $\mu$m | Viscosité Brookfield en mPs sortie broyage 10T | Viscosité Brookfield en mPs sortie broyage 100T | Viscosité Brookfield en mPs 24 h après broyage 10T | Viscosité Brookfield en mPs 24 h après broyage 100T |
|---|---|---|---|---|---|---|---|---|---|
| 49 | 700 | 30 | 1 | 80 | 2 | 3 900 | 470 | 4 250 | 520 |
| 50 | 700 | 40 | 1 | 20 | 2,6 | 3 600 | 450 | 3 900 | 475 |
| 51 | 700 | 45 | 1,5 | 28 | 2,5 | 3 400 | 500 | 3 700 | 540 |
| 52 | 1 000 | 30 | 1 | 90 | 1,9 | 4 100 | 500 | 4 400 | 545 |
| 53 | 1 000 | 40 | 1 | 23 | 2,5 | 3 650 | 465 | 4 000 | 500 |
| 54 | 1 000 | 45 | 1,5 | 29 | 2,5 | 3 000 | 420 | 3 250 | 440 |
| 55 | 1 500 | 30 | 1 | 83 | 2 | 3 800 | 490 | 4 150 | 520 |
| 56 | 1 500 | 40 | 1 | 14 | 2,7 | 3 700 | 480 | 4 000 | 510 |
| 57 | 1 500 | 45 | 1,5 | 25 | 2,7 | 3 300 | 460 | 3 550 | 485 |
| 58 | 3 200 | 30 | 1 | 54 | 2,4 | 5 200 | 620 | 5 500 | 670 |
| 59 | 3 200 | 40 | 1 | 9 | 3,3 | 3 700 | 490 | 4 000 | 520 |
| 60 | 3 200 | 45 | 1,5 | 7 | 3,9 | 3 150 | 420 | 3 300 | 450 |

Il découle de ce tableau que l'efficacité de l'agent de broyage, constitué par lesdits copolymères, présente une efficience équivalente à celle constatée pour les homopolymères de l'exemple 2 puisque cet agent conduit à une dimension moyenne des particules broyées inférieure à 2,9 microns, à condition que le poids moléculaire moyen desdits copolymères soit inférieur à 1 900.

Dans les conditions des Tableaux II à IV, l'agent de broyage selon l'invention se définit comme un polymère et/ou copolymère à base d'au moins un monomère éthylénique carboxylique de poids moléculaire moyen compris entre 500 et 1 900.

Exemple 5

Cet exemple, destiné à illustrer l'objet de l'invention, concerne le broyage de la même chaux grossière (déjà mise en oeuvre dans les exemples précédents) en présence d'un agent de broyage constitué par des copolymères d'acide acrylique (85% en poids) et d'acrylate de butyle (15% en poids) de poids moléculaires moyens variant de 800 à 4 500 et salifiés par l'ion sodium.

Dans ce cas, plusieurs essais ont été effectués (essais 61 à 77), les suspensions aqueuses de chaux soumises au broyage en présence dudit agent ayant des concentrations en matière sèche différentes variant de 30 à 55% en poids.

Tous ces essais ont été réalisés selon la même procédure et les mêmes moyens technologiques que dans l'exemple 1.

Tous les résultats de ces essais ont été consignés dans le Tableau V ci-après.

## TABLEAU V

| N° Essai | Poids moléculaire de l'agent de broyage | Concentration de la chaux en % en poids | % d'agent de broyage en sec/sec | Temps de broyage en mn | Diamètre Médian après broyage en μm | Viscosité Brookfield en mPs sortie broyage 10T | Viscosité Brookfield en mPs sortie broyage 100T | Viscosité Brookfield en mPs 24 h après broyage 10T | Viscosité Brookfield en mPs 24 h après broyage 100T |
|---|---|---|---|---|---|---|---|---|---|
| 61 | 800 | 30 | 1 | 80 | 2 | 4 000 | 440 | 4 150 | 460 |
| 62 | 800 | 40 | 1 | 23 | 2,5 | 3 550 | 420 | 3 750 | 455 |
| 63 | 800 | 45 | 1,5 | 30 | 2,5 | 4 100 | 380 | 4 250 | 410 |
| 64 | 800 | 50 | 1,5 | 28 | 2,6 | 5 000 | 520 | 5 450 | 580 |
| 65 | 1 200 | 40 | 1 | 27 | 2,4 | 2 750 | 350 | 3 100 | 385 |
| 66 | 1 200 | 45 | 1,5 | 39 | 2,2 | 3 300 | 340 | 3 560 | 375 |
| 67 | 1 200 | 50 | 1,5 | 38 | 2,2 | 3 500 | 400 | 3 750 | 430 |
| 68 | 1 200 | 55 | 1,5 | 30 | 2,6 | 5 200 | 550 | 5 500 | 600 |
| 69 | 1 500 | 30 | 1 | 79 | 1,9 | 3 800 | 440 | 3 950 | 470 |
| 70 | 1 500 | 40 | 1 | 21 | 2,6 | 3 700 | 480 | 4 100 | 500 |
| 71 | 1 500 | 45 | 1,5 | 38 | 2,2 | 4 000 | 410 | 4 250 | 440 |
| 72 | 2 500 | 30 | 1 | 63 | 2,2 | 3 500 | 410 | 3 900 | 450 |
| 73 | 2 500 | 40 | 1 | 15 | 3,1 | 3 200 | 390 | 3 500 | 420 |
| 74 | 2 500 | 45 | 1,5 | 17 | 3,2 | 3 300 | 360 | 3 600 | 400 |
| 75 | 4 500 | 30 | 1 | 54 | 2,4 | 4 400 | 450 | 4 800 | 465 |
| 76 | 4 500 | 40 | 1 | 10 | 3,1 | 3 500 | 380 | 4 100 | 420 |
| 77 | 4 500 | 45 | 1,5 | 9 | 3,3 | 2 500 | 350 | 2 800 | 400 |

Il découle de ce tableau que l'efficacité de l'agent de broyage, constitué par lesdits copolymères, présente une efficience équivalente à celle constatée pour les homopolymères de l'exemple 2 puisque cet agent conduit à une dimension moyenne des particules broyées inférieure à 2,9 microns, à condition que le poids moléculaire moyen desdits copolymères soit inférieur à 1 900.

Dans les conditions des Tableaux II à V, l'agent de broyage selon l'invention se définit comme un polymère et/ou copolymère à base d'au moins un monomère éthylénique carboxylique de poids moléculaire moyen compris dans l'intervalle 500 à 1 900.

Selon ces mêmes tableaux et en comparaison avec le Tableau I, il apparaît que la concentration en matière sèche des suspensions aqueuses de chaux à broyer peut atteindre des valeurs aussi élevées que 55% en poids, en présence de l'agent de broyage selon l'invention.

Exemple 6

Cet exemple, destiné à illustrer l'objet de l'invention, concerne le broyage de la même chaux grossière (déjà mise en oeuvre dans les exemples précédents) en présence d'un agent de broyage constitué par des copolymères d'acide acrylique (85% en poids) et de méthacrylate de méthyle (15% en poids) de poids moléculaires moyens variant de 800 à 2 500 et salifiés par l'ion sodium.

Dans ce cas, plusieurs essais ont été effectués (essais 78 à 86), les suspensions aqueuses de chaux soumises au broyage en présence dudit agent ayant des concentrations en matière sèche différentes variant de 30 à 45% en poids.

Tous ces essais ont été réalisés selon la même procédure et les mêmes moyens technologiques que dans l'exemple 1.

Tous les résultats de ces essais ont été consignés dans le Tableau VI ci-après.

## TABLEAU VI

| N° Essai | Poids moléculaire de l'agent de broyage | Concentration de la chaux en % en poids | % d'agent de broyage en sec/sec | Temps de broyage en mn | Diamètre Médian après broyage en μm | Viscosité Brookfield en mPs sortie broyage 10T | 100T | 24 h après broyage 10T | 100T |
|---|---|---|---|---|---|---|---|---|---|
| 78 | 800 | 30 | 1 | 82 | 1,9 | 3 200 | 410 | 3 400 | 445 |
| 79 | 800 | 40 | 1 | 34 | 2,4 | 4 100 | 450 | 4 450 | 480 |
| 80 | 800 | 45 | 1,5 | 44 | 2,3 | 4 900 | 550 | 5 300 | 600 |
| 81 | 1 500 | 30 | 1 | 80 | 1,9 | 3 800 | 460 | 4 100 | 500 |
| 82 | 1 500 | 40 | 1 | 32 | 2,4 | 3 600 | 420 | 3 900 | 465 |
| 83 | 1 500 | 45 | 1,5 | 40 | 2,6 | 4 000 | 495 | 4 300 | 530 |
| 84 | 2 500 | 30 | 1 | 53 | 2,4 | 3 000 | 455 | 3 800 | 500 |
| 85 | 2 500 | 40 | 1 | 21 | 3,3 | 3 300 | 410 | 3 750 | 470 |
| 86 | 2 500 | 45 | 1,5 | 25 | 3,4 | 3 100 | 400 | 3 600 | 450 |

Ces résultats permettent de tirer les mêmes conclusions que dans les exemples 2 à 5.

Exemple 7

Cet exemple, destiné à illustrer l'objet de l'invention, concerne le broyage de la même chaux grossière (déjà mise en oeuvre dans les exemples précédents) en présence d'un agent de broyage constitué par un homopolymère d'acide acrylique de poids moléculaire moyen 800, agissant sous une forme salifiée par les ions sodium, lithium, ammonium, potassium, ou sous une forme acide, ou encore neutralisé totalement par les ions sodium et calcium à un taux de 0,5 pour chacun.

Dans ce cas, plusieurs essais ont été effectués (essais 87 à 92), les suspensions aqueuses de chaux soumises au broyage en présence dudit agent ayant des concentrations en matière sèche fixées à 45% en poids.

Tous ces essais ont été réalisés selon la même procédure et les mêmes moyens technologiques que dans l'exemple 1.

Tous les résultats de ces essais ont été consignés dans le Tableau VII ci-après.

## TABLEAU VII

| N° Essai | Agent et Taux de salification | Temps de broyage en mn | Diamètre Médian en $\mu$m | Viscosité Brookfield en mPs sortie broyage | |
|---|---|---|---|---|---|
| | | | | 10T | 100T |
| 87 | Na : 1,0 | 40 | 2,4 | 6 500 | 650 |
| 88 | Li : 1,0 | 52 | 2,0 | 3 500 | 470 |
| 89 | NH4: 1,0 | 15 | 2,9 | 2 400 | 390 |
| 90 | K : 1,0 | 29 | 2,3 | 4 700 | 430 |
| 91 | Acide | 16 | 2,9 | 3 050 | 430 |
| 92 | Na : 0,5 Ca : 0,5 | 27 | 2,7 | 3 100 | 350 |

Quelle que soit la nature des ions salifiants ou l'acidité libre existante de l'agent de broyage selon l'invention, celui-ci dispose d'un bonne efficacité puisqu'il conduit par broyage à une dimension moyenne des particules broyées inférieure à 2,9 microns, à condition que le poids moléculaire moyen dudit homopolymère soit inférieur à 1 900.

Exemple 8

Cet exemple illustre l'application semi industrielle de l'invention par utilisation de l'agent de broyage dans une suspension aqueuse de chaux à affiner destinée, après avoir subi un broyage, à la neutralisation d'effluents gazeux acides.

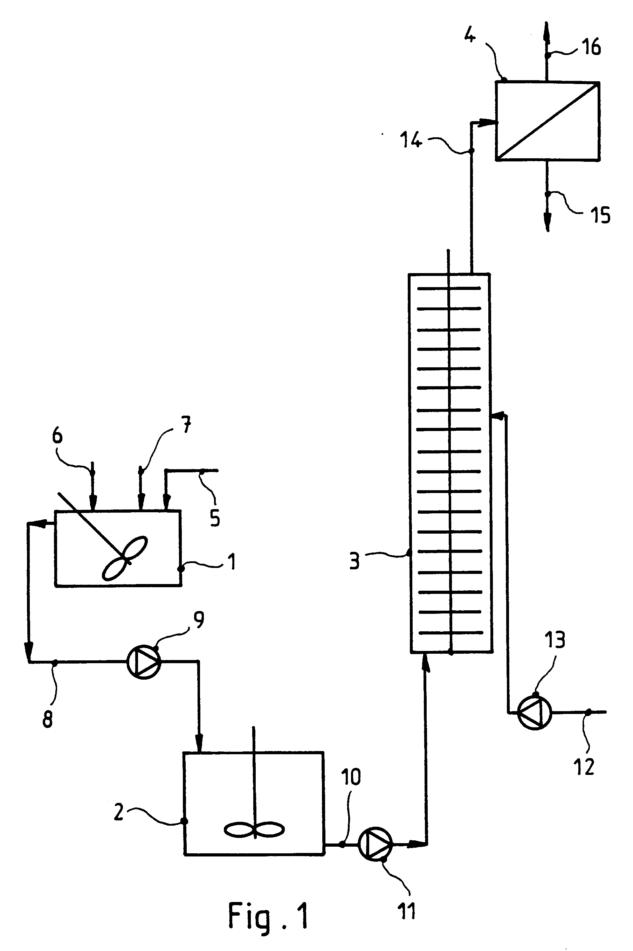

Dans ce but et selon la Figure 1, on a utilisé une installation pilote comportant un bac de délitage (1) muni d'une agitation, un bac tampon (2) maintenu sous agitation, un broyeur (3) à micro-éléments et une zone de séparation (4).

On a introduit dans le bac de délitage (1) l'eau nécessaire par le conduit (5), puis l'agent de broyage selon l'invention par le conduit (6) et enfin la chaux à affiner par le conduit (7).

La suspension ainsi formée a été maintenue sous agitation dans ledit bac pendant environ 15 minutes.

La suspension aqueuse dans la zone de délitage avait la composition exprimée en pour cent en poids :

```
- chaux (Ca(OH)₂ 100%)                                          50%

- agent de broyage en sec/sec

  copolymère d'acide acrylique (85%), acrylate de butyle (15%) de

  poids moléculaire 1 200 salifié par l'ion sodium                1%

- eau                                                           49%
```

La suspension aqueuse délitée a été transférée du bac de délitage (1) dans le bac tampon (2) par l'intermédiaire du conduit (8) muni de la pompe (9).

Le bac tampon (2) muni d'un moyen d'agitation assurait l'alimentation régulière du broyeur (3) grâce au conduit (10) et la pompe (11).

Le broyeur à micro-éléments (3) du type Dyno-Mill, d'une capacité de 50 litres, se composait d'une double enveloppe cylindrique permettant la circulation d'un fluide de refroidissement. A l'intérieur de la double enveloppe se trouvait un impulseur tournant de vitesse périphérique tangentielle de 16 mètres par seconde.

Les micro-éléments de broyage étaient des billes de corindon ayant un diamètre de 1,2 à 1,6 millimètre, représentant une masse totale de 100 kilogrammes.

Le taux de remplissage par les micro-éléments du volume utile était de 0,85.

Le débit d'alimentation en suspension à soumettre au broyage était de 1 300 kilogrammes à l'heure.

La température de la suspension dans le broyeur était maintenue à 27°C ± 1°C.

A un niveau approprié du broyeur à micro-éléments, et si cela s'avérait nécessaire, il est possible d'introduire dans la suspension de chaux en cours ou en fin de broyage l'agent modificateur de rhéologie de telle manière que les caractéristiques rhéologiques de la suspension microparticulaire soient adaptées à l'application ou aux applications envisagées.

Dans ces conditions, l'agent modificateur de rhéologie est introduit dans le broyeur (3) par l'intermédiaire du conduit (12) et de la pompe doseuse (13).

A la sortie du broyeur (3) se trouvait une zone de séparation (4) permettant le partage de la suspension de chaux microparticulaire selon la sortie (15) et des micro-éléments selon la sortie (16).

Les caractéristiques physiques et chimiques de la suspension microparticulaire obtenue après la séparation dans la zone (4) étaient les suivantes :

EP 0 313 483 B1

| | avant broyage | après broyage |
|---|---|---|
| diamètre médian en μm | 4,85 | 2,2 |
| intervalle de distribution des diamètres microparticulaires en μm | 0,5 à 30 μm | 0,4 à 6,5 μm |
| surface spécifique | 9984 $cm^2.g^{-4}$ | 21 065 $cm^2.g^{-4}$ |
| viscosité de la suspension | 350 mPs | 5 200 mPs |
| | à 100T/mn | à 10T/mn |
| | | 550 mPs à 100T/mn |

A titre de comparaison et dans les mêmes conditions technologiques, on a traité dans le broyeur à micro-éléments (3) une suspension aqueuse de chaux à affiner, exempte de tout agent de broyage, mais très faible en concentration.

Cette suspension avait la composition suivante exprimée en pour cent en poids:

- chaux ($Ca(OH)_2$ à 100%)          20%

- eau          80%

Cette suspension, soumise au broyage, n'a pu être introduite dans le broyeur qu'au débit restreint de 200 kilogrammes à l'heure (alors que, selon l'invention, ce débit était de 1 300 kilogrammes à l'heure) pour parvenir à des caractéristiques dimensionnelles des microparticules sensiblement équivalentes à celles obtenues lors de la mise en oeuvre de l'agent de broyage selon l'invention.

**Revendications**

1. Agent de broyage de la chaux grossière à affiner par broyage en milieu aqueux jusqu'à une dimension microparticulaire inférieure à 4 micromètres, constitué de polymère et/ou copolymère éthylénique hydrosoluble, caractérisé en ce que, dans le but d'augmenter la réactivité de la chaux, ledit agent est constitué d'au moins un polymère et/ou copolymère acide :
    a) formé d'au moins un monomère éthylénique monocarboxylique,
    b) sélectionné dans l'intervalle des poids moléculaires moyens compris entre 200 et 1 900.

2. Agent de broyage de la chaux grossière à affiner par broyage en milieu aqueux selon la revendication 1, caractérisé en ce que le monomère éthylénique monocarboxylique est préférentiellement choisi parmi les acides acrylique ou méthacrylique.

3. Agent de broyage de la chaux grossière à affiner par broyage en milieu aqueux selon les revendications 1 ou 2, caractérisé en ce que les autres monomères sont choisis dans le groupe constitué par l'acide itaconique, crotonique, fumarique, anhydride maléique ou encore isocrotonique, aconitique, mésaconique, sinapique, undécylénique, angélique, hydroxyacrylique, ou bien l'acroléïne, l'acrylamide et ses substitués, l'acrylonitrile, les esters des acides acrylique et méthacrylique et en particulier les acrylates et méthacrylates en $C_1$ à $C_8$ ainsi que le méthacrylate de diméthylaminoéthyle quaternisé ou non, les imidazoles, vinylpyrolidone, vinylcaprolactame, l'éthylène, le propylène, l'isobutylène, le diisobutylène, l'acétate de vinyle, le styrène et ses substitués, l'alphaméthylstyrène, la méthylvinylcétone, les chlorures de vinyle, les monomères hydroxylés, plus spécialement les acrylates et les méthacrylates d'éthylène glycol, de propylène glycol ainsi que leurs dérivés phosphatés, phosphonés, phosphonylés, sulfatés, sulfonés, nitrés ou nitrosés.

4. Agent de broyage de la chaux grossière à affiner par broyage en milieu aqueux selon l'une quelconque des revendications 1 à 3, caractérisé en ce que le polymère et/ou copolymère résulte d'une polymérisation ou copolymérisation selon les procédés connus en présence d'initiateurs et des régulateurs appropriés, en milieu aqueux, alcoolique, hydroalcoolique, aromatique, aliphatique ou dans un solvant halogéné, de l'un au moins des monomères acides acrylique et/ou méthacrylique.

5. Agent de broyage de la chaux grossière à affiner par broyage en milieu aqueux selon l'une quelconque des revendications 1 à 4, caractérisé en ce que le milieu de polymérisation est choisi dans le groupe constitué par l'eau, le méthanol, l'éthanol, le propanol, l'isopropanol, les butanols, ou encore le diméthylformamide, le diméthylsulfoxyde, le tétrahydrofurane, l'acétone, la méthyléthylcétone, l'acétate d'éthyle, l'acétate de butyle, l'hexane, l'heptane, le benzène, le toluène, l'éthylbenzène, le xylène, le mercaptoéthanol, le tertiododécylmercaptan, l'acide thioglycolique et ses esters, le n-dodécylmercaptan, les acides acétique, tartrique, lactique, citrique, gluconique, glucoheptonique, l'acide 2-mercaptopropionique, le thiodiéthanol, les solvants halogénés comme le tétrachlorure de carbone, le chloroforme, le chlorure de méthylène, le chlorure de méthyle, les éthers de monopropylèneglycol, diéthylèneglycol.

6. Agent de broyage de la chaux grossière à affiner par broyage en milieu aqueux selon l'une quelconque des revendications 1 à 5, caractérisé en ce que le polymère et/ou copolymère a un poids moléculaire préférentiellement compris entre 500 et 1 500.

7. Agent de broyage de la chaux grossière à affiner par broyage en milieu aqueux selon l'une quelconque des revendications 1 à 6, caractérisé en ce que le polymère et/ou copolymère est mis en oeuvre sous forme acide.

8. Agent de broyage de la chaux grossière à affiner par broyage en milieu aqueux selon l'une quelconque des revendications 1 à 6, caractérisé en ce que le polymère et/ou copolymère est au moins partiellement neutralisé par un agent de neutralisation disposant d'une fonction monovalente.

9. Agent de broyage de la chaux grossière à affiner par broyage en milieu aqueux selon la revendication 8, caractérisé en ce que l'agent de neutralisation est choisi dans le groupe des métaux alcalins et assimilés et préférentiellement dans le groupe constitué par le lithium, le sodium, le potassium et l'ammonium.

10. Agent de broyage de la chaux grossière à affiner par broyage en milieu aqueux selon l'une quelconque des revendications 8 ou 9, caractérisé en ce que l'agent de neutralisation monovalent est associé à un agent de neutralisation polyvalent.

11. Agent de broyage de la chaux grossière à affiner par broyage en milieu aqueux selon la revendication 10, caractérisé en ce que l'agent de neutralisation polyvalent est choisi dans le groupe constitué par le calcium, le magnésium, le zinc, l'aluminium, les amines.

12. Suspension aqueuse de chaux affinée contenant l'agent de broyage selon l'une quelconque des revendications 1 à 11, caractérisée en ce qu'elle est réalisée selon les étapes suivantes :
a) on réalise sous agitation la préparation d'une suspension aqueuse de chaux grossière en introduisant d'abord tout ou partie de l'agent de broyage dans la phase aqueuse puis la chaux de manière à obtenir une suspension fluide et souhaitablement homogène,
b) on introduit en continu la suspension préparée selon (a) dans une zone de broyage constituée par un broyeur à micro-éléments,
c) on maintient la température de la suspension au cours du broyage à un niveau inférieur à 100° C et préférentiellement comprise entre la température ambiante et 50° C,
d) on malaxe la suspension à broyer en présence des micro-éléments pendant le temps nécessaire à l'obtention de la granulométrie moyenne recherchée,

e) éventuellement, on introduit au cours du broyage en au moins une fois une fraction complémentaire de l'agent de broyage,

f) à la sortie du broyeur, on sépare en continu la suspension de chaux finement broyée d'avec les corps broyants et les particules de chaux refusées parce que trop grossières,

g) éventuellement, on introduit dans la suspension de chaux finement broyée au moins un agent modificateur de rhéologie.

13. Suspension aqueuse de chaux affinée selon la revendication 12, caractérisée en ce que l'agent de broyage est introduit à raison de 0,05 à 2% en poids de matières actives par rapport au poids sec de chaux, et préférentiellement à raison de 0,5% à 1,5%.

14. Suspension aqueuse de chaux affinée selon les revendications 12 ou 13, caractérisée en ce qu'elle a une concentration en matière sèche d'au moins 20% en poids, préférentiellement comprise entre 40% et 60% en poids, et que la dimension des particules affinées est inférieure à 4 microns et leur diamètre médian inférieur à 2,9 microns.

15. Suspension aqueuse de chaux affinée selon l'une quelconque des revendications 12 à 14, caractérisée en ce que l'agent modificateur de rhéologie est introduit à raison de 0,01% à 3% en poids de matières actives par rapport au poids sec de chaux.

16. Applications des suspensions aqueuses de chaux affinées par la mise en oeuvre de l'une quelconque des revendications 1 à 15 aux neutralisations chimiques dans les procédés industriels, préférentiellement au traitement des eaux et des fumées industrielles, agents de traitement de surface et agents antiseptiques.

## Claims

1. Grinding agent for use in the refining of coarse lime by grinding in an aqueous medium to give microparticles of less than 4 micrometres in size, consisting of a water soluble ethylenic polymer and/or copolymer, characterized in that, in order to increase the reactivity of the lime, the said grinding agent consists of at least one acid polymer and/or copolymer :
   a) formed from at least one monocarboxylic ethylenic monomer,
   b) selected to have a mean molecular weight within the range of 200 to 1 900.

2. Grinding agent for use in the refining of coarse lime by grinding in an aqueous medium according to Claim 1, characterized in that the monocarboxylic ethylenic monomer is preferably chosen from among the acrylic or methacrylic acids.

3. Grinding agent for use in the refining of coarse lime by grinding in an aqueous medium according to Claims 1 or 2, characterized in that the other monomers are chosen from the group consisting of itaconic, crotonic and fumaric acids and maleic anhydride, or also isocrotonic, aconitic, mesaconic, sinapic, undecylenic, angelic or hydroxyacrylic acids, or indeed acrolein, acrylamide and its substituent compounds, acrylonitrile, acrylic and methacrylic acid esters and in particular acrylates and methacrylates having 1 to 8 carbon atoms, as well as dimethylaminoethyl methacrylate, both as it is or as its quaternary compound, imidazoles, vinylpyrolidone, vinylcaprolactam, ethylene, propylene, isobutylene, diisobutylene, vinyl acetate, styrene and its substituent compounds, alphamethylstyrene, methylvinylketone, vinyl chlorides, hydroxylated monomers, more especially ethylene glycol and propylene glycol acrylates and methacrylates, as well as their phosphate, phosphonium, phosphonyl, sulphate, sulphonate, nitrate or nitroso- derivatives.

4. Grinding agent for use in the refining of coarse lime by grinding in an aqueous medium according to any one of the Claims 1 to 3, characterized in that the polymer and/or copolymer results from the polymerization or copolymerization of a least one of the acrylic and/or methacrylic acid monomers, according to known processes, in an aqueous, alcoholic, hydroalcoholic, aromatic or aliphatic medium or in a halogenated solvent, in the presence of suitable initiators and regulators.

5. Grinding agent for use in the refining of coarse lime by grinding in an aqueous medium according to any one of the Claims 1 to 4, characterized in that the polymerization medium is chosen from the group consisting of water, methanol, ethanol, propanol, isopropanol, butanols, or also dimethylformamide, dimethylsulphoxide, tetrahydrofuran, acetone, methylethylketone, ethyl acetate, butyl acetate, hexane, heptane, benzene, toluene, ethylbenzene, xylene, mercaptoethanol, tertiododecylmercaptan, thioglycollic acid and its esters, n-dodecylmercaptan, acetic, tartaric, lactic, citric, gluconic and glucoheptonic acids, 2-mercaptopropionic acid, thiodiethanol, halogenated solvents such as carbon tetrachloride, chloroform, methylene chloride, methyl chloride, monopropyleneglycol ethers and diethylene glycol.

6. Grinding agent for use in the refining of coarse lime by grinding in an aqueous medium according to any one of the Claims 1 to 5, characterized in that the polymer and/or copolymer has a molecular weight preferably of between 500 and 1 500.

7. Grinding agent for use in the refining of coarse lime by grinding in an aqueous medium according to any one of the Claims 1 to 6, characterized in that the polymer and/or copolymer is used in its acid form.

8. Grinding agent for use in the refining of coarse lime by grinding in an aqueous medium according to any one of the Claims 1 to 6, characterized in that the polymer and/or copolymer is at least partially neutralized by a neutralizing agent with a monovalent function.

9. Grinding agent for use in the refining of coarse lime by grinding in an aqueous medium according to Claim 8, characterized in that the neutralizing agent is chosen from the group of alkali metals or similar elements, preferably from the group consisting of lithium, sodium, potassium and ammonium.

10. Grinding agent for use in the refining of coarse lime by grinding in an aqueous medium according to either of Claims 8 or 9, characterized in that the monovalent neutralizing agent is associated with a polyvalent neutralizing agent.

11. Grinding agent for use in the refining of coarse lime by grinding in an aqueous medium according to Claim 10, characterized in that the polyvalent neutralizing agent is chosen from the group consisting of calcium, magnesium, zinc, aluminium and amines.

12. Aqueous suspension of refined lime containing the grinding agent according to any one of the Claims 1 to 11 , characterized in that it is produced according to the following steps :
a) an aqueous suspension of coarse lime is prepared, with stirring, by first of all adding all or part of the grinding agent to the aqueous phase, followed by the lime, so as to obtain a fluid suspension which is, as desired, homogeneous,
b) the suspension prepared according to a) is introduced into a grinding zone consisting of a grinder with microcomponents,
c) the temperature of the suspension is maintained during grinding at a level of less than 100°C and preferably between ambient temperature and 50°C.
d) the suspension to be ground is mixed in the presence of the micro-components for a period of time necessary to obtain the desired particle size distribution.
e) during grinding, at least one supplementary fraction of the grinding agent may be added if required,
f) as the finely ground lime suspension leaves the grinder, it is continually separated from the grinding bodies and the lime particles which are rejected as being too coarse,
g) at least one rheology modifying agent may be added if required to the suspension of finely ground lime.

13. Aqueous suspension of lime refined according to Claim 12, characterized in that the grinding agent is introduced at a rate of 0.05 to 2% by weight of active material per dry weight of lime, preferably at a rate of 0.5% to 1.5%.

14. Aqueous suspension of lime refined according to Claims 12 or 13 characterized in that it has a concentration of dry material of at least 20% by weight, preferably between 40% and by 60% by weight and that the size of the refined particles is less than 4 microns and their median diameter is less than 2.9 microns.

**15.** Aqueous suspension of lime refined according to any one of Claims 12 to 14, characterized in that the rheology modifying agent is added at rate of 0.01 % to 3% by weight of active material per weight of dry lime.

**16.** Application of aqueous suspensions of lime, refined by means of any one of Claims 1 to 15, to chemical neutralization in industrial processes, preferably to the treatment of water and industrial fumes, surface treatment agents and antiseptic agents.

**Patentansprüche**

**1.** Mittel zum Vermahlen von grobem, durch Mahlen in wäßrigem Medium bis zu einer Mikroteilchen-Dimension unterhalb von 4 $\mu$m zu verfeinerndem Kalk, zusammengesetzt aus wasserlöslichem ethylenischem Polymer und/oder Copolymer, dadurch gekennzeichnet, daß, mit dem Ziel, die Reaktivität des Kalks zu erhöhen, das Mittel aus mindestens einem sauren Polymer und/oder Copolymer zusammengesetzt ist:
   a) das aus mindestens einem ethylenischen monocarboxylischen Monomer gebildet ist,
   b) das aus einem Bereich mittlerer Molekulargewichte, der zwischen 200 und 1900 eingeschlossen ist, ausgewählt ist.

**2.** Mittel zum Vermahlen von grobem, durch Mahlen in wäßrigem Medium zu verfeinerndem Kalk nach Anspruch 1, dadurch gekennzeichnet, daß das ethylenische monocarboxylische Monomer vorzugsweise aus Acrylsäure oder Methacrylsäure ausgewählt ist.

**3.** Mittel zum Vermahlen von grobem, durch Mahlen in wäßrigem Medium zu verfeinerndem Kalk nach Anspruch 1 oder 2, dadurch gekennzeichnet,
daß die anderen Monomeren aus der Gruppe ausgewählt sind, die aus Itacon-, Croton-, Fumarsäure, Maleinsäureanhydrid oder weiter Isocroton-, Aconit-, Mesacon-, Sinapin, Undecylen-, Angelika-, Hydroxyacrylsäure oder auch Acrolein, Acrylamid und seinen substituierten Produkten, Acrylnitril, den Estern von Acryl- und Methacrylsäure und insbesondere den $C_1$-$C_8$-Acrylaten und -Methacrylaten sowie Dimethylaminoethylmethacrylat, quaternisiert oder nicht, den Imidazolen, Vinylpyrrolidon, Vinylcaprolactam, Ethylen, Propylen, Isobutylen, Diisobutylen, Vinylacetat, Styrol und seinen substituierten Produkten, alpha-Methylstyrol, Methylvinylketon, den Vinylchloriden , den hydroxylierten Monomeren, spezieller den Acrylaten und Methacrylaten von Ethylenglykol, Propylenglykol sowie deren phosphatierten, phosphonierten, phosphonylierten, sulfatierten, sulfonierten, nitrierten oder nitrosierten Derivaten besteht.

**4.** Mittel zum Vermahlen von grobem, durch Mahlen in wäßrigem Medium zu verfeinerndem Kalk nach einem der Ansprüche 1 bis 3, dadurch gekennzeichnet, daß das Polymer und/oder das Copolymer aus einer Polymerisation oder Copolymerisation gemäß den bekannten Verfahren in Gegenwart von geeigneten Initiatoren und Regulatoren in wäßrigem, alkoholischem, wäßrig-alkoholischem, aromatischem, aliphatischem Medium oder in einem halogenierten Lösungsmittel von mindestens einem der Monomeren Acryl- und/oder Methacrylsäure resultiert.

**5.** Mittel zum Vermahlen von grobem, durch Mahlen in wäßrigem Medium zu verfeinerndem Kalk nach einem der Ansprüche 1 bis 4, dadurch gekennzeichnet, daß das Polymerisationsmedium aus der Gruppe ausgewählt ist, die aus Wasser, Methanol, Ethanol, Propanol, Isopropanol, den Butanolen oder weiter Dimethylformamid, Dimethylsulfoxid, Tetrahydrofuran, Aceton, Methylethylketon, Ethylacetat, Butylacetat, Hexan, Heptan, Benzol, Toluol, Ethylbenzol, Xylol, Mercaptoethanol, tert. -Dodecylmercaptan, Thioglykolsäure und ihren Estern, n-Dodecylmercaptan, Essig-, Wein-, Milch-, Citronen-, Glucon-, Glucoheptonsäure, 2-Mercaptopropionsäure, Thiodiethanol, den halogenierten Lösungsmitteln, wie Tetrachlorkohlenstoff, Chloroform, Methylenchlorid, Methylchlorid, den Ethern von Monopropylenglykol, Diethylenglykol besteht.

**6.** Mittel zum Vermahlen von grobem, durch Mahlen in wäßrigem Medium zu verfeinerndem Kalk nach einem der Ansprüche 1 bis 5, dadurch gekennzeichnet, daß das Polymer und/oder Copolymer ein Molekulargewicht von vorzugsweise 500 bis 1500 aufweist.

7. Mittel zum Vermahlen von grobem, durch Mahlen in wäßrigem Medium zu verfeinerndem Kalk nach einem der Ansprüche 1 bis 6, dadurch gekennzeichnet, daß das Polymer und/oder Copolymer in saurer Form eingesetzt wird.

8. Mittel zum Vermahlen von grobem, durch Mahlen in wäßrigem Medium zu verfeinerndem Kalk nach einem der Ansprüche 1 bis 6, dadurch gekennzeichnet, daß das Polymer und/oder Copolymer mindestens teilweise durch ein Neutralisationsmittel, das über eine einwertige Funktion verfügt, neutralisiert ist.

9. Mittel zum Vermahlen von grobem, durch Mahlen in wäßrigem Medium zu verfeinerndem Kalk nach Anspruch 8, dadurch gekennzeichnet, daß das Neutralisationsmittel aus der Gruppe der Alkalimetalle und Gleichgestellten, und vorzugsweise aus der Gruppe, die aus Lithium, Natrium, Kalium und Ammonium besteht, ausgewählt ist.

10. Mittel zum Vermahlen von grobem, durch Mahlen in wäßrigem Medium zu verfeinerndem Kalk nach einem der Ansprüche 8 oder 9, dadurch gekennzeichnet, daß dem einwertigen Neutralisationsmittel ein mehrwertiges Neutralisationsmittel beigeordnet ist.

11. Mittel zum Vermahlen von grobem, durch Mahlen in wäßrigem Medium zu verfeinerndem Kalk nach Anspruch 10, dadurch gekennzeichnet, daß das mehrwertige Neutralisationsmittel aus der aus Calcium, Magnesium, Zink, Aluminium, den Aminen bestehenden Gruppe ausgewählt ist.

12. Wäßrige Suspension von verfeinertem Kalk, die das Mittel zum Vermahlen nach einem der Ansprüche 1 bis 11 enthält, dadurch gekennzeichnet, daß sie gemäß den folgenden Stufen hergestellt wird:
    a) man bewerkstelligt unter heftiger Bewegung die Herstellung einer wäßrigen Suspension von grobem Kalk, indem man zuerst das ganze oder einen Teil des Mittel(s) zum Vermahlen, dann den Kalk so in die wäßrige Phase einträgt, daß man eine dünnflüssige und wünschenswerterweise homogene Suspension erhält,
    b) man führt kontinuierlich die gemäß a) hergestellte Suspension in eine Zone zum Vermahlen, die aus einem Zerkleinerer mit Mikroelementen aufgebaut ist, ein,
    c) man hält die Temperatur der Suspension im Verlauf des Mahlens bei einem Niveau unterhalb von 100°C und vorzugsweise im Bereich von Umgebungstemperatur bis 50°C,
    d) man knetet die zu vermahlende Suspension in Gegenwart der Mikroelemente über die Zeit, die zum Erhalten der mittleren angestrebten Korngrößenverteilung notwendig ist,
    e) man trägt gegebenenfalls im Verlauf des Mahlens mindestens einmal einen ergänzenden Teil des Mittels zum Vermahlen ein,
    f) man trennt am Ausgang des Zerkleinerers kontinuierlich die fein vermahlene Kalksuspension von den Mahlkörpern und den Kalkteilchen, die zurückgewiesen werden, weil sie zu grob sind, ab,
    g) man trägt gegebenenfalls mindestens ein Rheologie-Modifizierungsmittel in die Suspension von fein vermahlenem Kalk ein.

13. Wäßrige Suspension von verfeinertem Kalk nach Anspruch 12, dadurch gekennzeichnet, daß das Mittel zum Vermahlen im Verhältnis von 0,05 bis 2 Gew.-% an aktiven Stoffen, bezogen auf das Kalk-Trockengewicht, und vorzugsweise im Verhältnis von 0,5 bis 1,5 %, eingetragen wird.

14. Wäßrige Suspension von verfeinertem Kalk nach Anspruch 12 oder 13, dadurch gekennzeichnet, daß sie eine Konzentration an trockenem Material von mindestens 20 Gew.-%, vorzugsweise von 40 bis 60 Gew.-%, aufweist und daß die Dimension der verfeinerten Teilchen unterhalb von 4 $\mu$m und deren mittlerer Durchmesser unterhalb von 2,9 $\mu$m liegt.

15. Wäßrige Suspension von verfeinertem Kalk nach einem der Ansprüche 12 bis 14, dadurch gekennzeichnet, daß das Rheologie-Modifizierungsmittel im Verhältnis von 0,01 bis 3 Gew.-% an aktiven Stoffen, bezogen auf das Kalk-Trockengewicht, eingeführt wird.

16. Verwendungen der wäßrigen Suspensionen von verfeinertem Kalk durch das Einsetzen von irgendeiner nach den Ansprüchen 1 bis 15 bei chemischen Neutralisationen in industriellen Verfahren, vorzugsweise bei der Behandlung von industriellen Wässern und industriellem Rauch, Mitteln zur Oberflächenbehandlung und antiseptischen Mitteln.

Fig . 1